# EUROPEAN PATENT APPLICATION

(11) **EP 2 241 540 A2**
(43) Date of publication of application: **20.10.2010**
(21) Application number: 10168266.4
(22) Date of filing: 19.12.2008
(51) Int. Cl.: C03C 17/25, B05B 7/04

(54) **Device for forming aerosol, and method and apparatus for coating glass**

(30) Priority: 20.12.2007 FI 20071003; 14.03.2008 FI 20080217
(62) Divisional of application: 08864733.4
(71) Applicant: Beneq Oy, 01510 Vantaa (FI)
(72) Inventor: Ilmarinen, Joonas, 00560, Helsinki (FI); Rajala, Markku, 01280, Vantaa (FI); Valkeapää, Tomi, 00710, Helsinki (FI); Asikkala, Kai, 00500, Helsinki (FI)
(74) Representative: Valkeiskangas, Tapio Lassi Paavali

(57) **Abstract**

The invention relates to an apparatus (1) and a method for providing the surface of glass (2) with a coating. In the method, at least one liquid raw material (3) is atomized by means of at least one gas-dispersing atomizer (6) into aerosol that is discharged from an atomizing head (34) of the atomizer (6). The drop size of the aerosol discharged from the atomizing head (34) of the atomizer (6) is reduced by changing the hydrodynamic properties of the aerosol flow by means of flow restraints (36), and the aerosol is conducted onto the surface of a glass product (2), where the aerosol reacts forming a coating onto the surface of the glass product (2).

## Description

### BACKGROUND OF THE INVENTION

The invention relates to an apparatus for coating glass and particularly to an apparatus according to the preamble of claim 1 for providing a coating onto the surface of glass, the apparatus comprising at least one gas-dispersing atomizer for atomizing at least one liquid used for coating the glass into aerosol by means of gas at an atomizing head of the atomizer. The invention further relates to a method for coating a glass product, and particularly to a method according to the preamble of claim 14 for providing a coating onto the surface of a glass product from at least one liquid raw material.

It is known that coatings having the desired characteristics for the use of glass can be manufactured by using gaseous reactants that disperse into a hot glass surface. Such characteristics include for instance a refractive index fitting implemented with a coating having a refractive index between the glass and the coating, preferably the square root of the product of the refractive indices of the glass and the coating, electrochromism, i.e. a change in the colour of the glass when an electric current is conducted into the glass, a change in the absorption of solar radiation of the glass (so-called 'solar control' glass), and, particularly, coating glass with an electrically conductive coating, such as tin oxide doped with fluorine, antimony or indium or zinc oxide doped with aluminium, the electrically conductive coating causing the glass to reflect infrared radiation, or such glass, coated with an electrically conductive, transparent coating, may be used in solar cell applications.

Flat glass may be coated with a plurality of known methods, such as Chemical Vapor Deposition (CVD), sputtering, plasma deposition or the spray pyrolysis method.

In the spray pyrolysis method, the raw material is typically a liquid containing the substances required for generating the coating that are sprayed onto the surface of the hot glass to be coated.

Coatings possessing the desired characteristics for use in glass may be manufactured, not only by using gaseous reactants, also by using liquid reactants. The use of liquid reactants enables a process that is generally simpler and more inexpensive than gaseous reactants, but the process rate is substantially slower than when gaseous reactants are used.

However, in practice, it has unfortunately proven difficult to provide sufficiently uniform coatings having the desired thickness. Although the manufacture of such coatings succeeds at a reasonable production rate provided the temperature of the glass is sufficiently high, typically more than 650°C, it has proven difficult to manufacture such coatings profitably and at a sufficient production rate when the temperature of the surface of the glass is less than 650°C. Herein, a sufficient production rate refers to a coating of the required thickness being provided onto glass whose rate is preferably more than 5 m/min., more preferably more than 10 m/min. and most preferably more than 15 m/min., whereby the coating can be provided onto the surface of a moving glass ribbon in a glass production process, i.e. in a so-called float process. A temperature of less than 650°C is preferably as regards the manufacture of the coating, since in that case the coating may be manufactured in the float process after the tin bath, whereby the environmental conditions for the coating are substantially less demanding than in the area of the tin bath. A temperature of less than 650°C is preferable also when a coating is manufactured in an offline process, since in the glass hardening process, the maximum temperature of the glass is typically 650°C.

Finnish published patent application 94620, Pilkington plc and Flachglas Aktiengesellschaft, 15 April 1990, discloses a method of coating glass in which at least two gaseous reactants react together to form a coating on a moving ribbon of hot glass. In order for the method to be able to industrially produce coatings of a strength of more than 200 nm in a short coating zone, the process comprises establishing a first flow of a first reactant gas onto the hot glass surface, establishing a second flow of a second reactant gas as a turbulent flow, and directing the combined gas flow onto the surface of the hot glass as a turbulent flow. The process may be applied to producing a metal oxide coating on hot glass. The examples presented in the publication describe the production of a coating when the speed of the glass ribbon is 8 m/min. and the temperature of the glass 580°C. The thickness of the coating was 250 to 275 nm. In the second example, the thickness of the coating was slightly more than 300 nm. In practice, such a thin layer thickness does not result in a sufficiently low emissivity of the glass (less than 0.2) in order for the glass to be useful as low-emissivity glass (low-e). The publication does not disclose the emissivity or sheet resistance values of the coating. In the examples described in the publication, the first reactant gas was stannic tetrachloride in preheated dry air at 354°C as a carrier gas. The stannic chloride was supplied at a rate of 84 kg per hour, and the dry air was supplied at a rate of 105 cubic metres per hour. The second reactant gas was fluoric acid also mixed into preheated air. The fluoric acid was supplied at a rate of 34 kg per hour, and the air was supplied at a rate of 620 cubic metres per hour. The reactant gases mixed rapidly to provide a combined flow through the coating chamber. 84 kg stannic chloride requires about 7.3 cubic meters of oxygen for complete oxidation, so that, the oxygen content in the air being about 20%, it may be stated that stannic chloride reacts in the feed chamber at an atmosphere having no extra oxygen as regards the oxidation reaction. Such a reaction atmosphere is not advantageous for the formation of a stannic oxide layer, since it is preferable as regards conductivity that the structure of stannic oxide includes errors, preferably oxygen deficit.

Publication US 2,564,708, Corning Glass Works, 21 August 1951, discloses a heat screen that reflects low temperature heat radiation and transmits high temperature heat radiation. The heat screen is based on a film deposited on the surface of a glass plate by heating the glass plate to a temperature of more than 500°C by atomizing a solution containing the desired metal salts and by spraying the atomized liquid on the surface of the glass plate to produce a coating of the desired thickness. The desired film material is tin oxide, tin oxide doped with antimony or a tin oxide doped with indium oxide. The publication mentions that when a coating is produced on borosilicate glass at a temperature of 700°C, the production of a film of a thickness of 100 to 700 nm takes 10 to 20 seconds. The publication does not mention the drop size of the atomized raw material solution, but based on the thickness of the film, the production time and the temperature, it can be concluded that the average diameter of a drop was several dozens of micrometres, which is a typical drop size when producing drops with a conventional gas or pressure dispersing atomizer. For providing a coating layer of a sufficient thickness when the glass ribbon to be coated moves at a rate of 5 m/min., the length of the coating chamber should be about 1 metre, and at a rate of 15 m/min., up to about 3 metres, and the temperature distinctly more than 650°C. This makes the production process disclosed in the publication uneconomic in connection with a float process and impossible in connection with post-treatment of glass.

Published patent US 2,566,346, Pittsburgh Plate Glass Co., 4 September 1951, discloses a method of producing an electroconductive coating on glass by using an aqueous solution as the raw material. Said published patent further discloses a soda glass based glass product having an electroconductive tin oxide coating doped with fluorine on the surface thereof, the thickness of the coating being 25 to 600 nm and the specific resistivity being 200 to 500 µΩ-cm. The examples of the publication disclose a method of providing a coating based on conventional spraying of a liquid raw material on the surface of an object. According to the examples, a layer of a thickness of about 75 nanometres was produced by a 5-second spraying at a spraying rate of 120 ml/min. The specific resistivity of the coating produced was about 400 µΩ-cm. To achieve lower specific resistivities, thicker coatings are required. As was mentioned above, the thickness of the coating should typically be several hundreds of nanometres, which makes the method disclosed in the publication unpractical in connection with a glass production process.

Published patent US 4,721,632, Ford Motor Company, 26 January 1988, discloses a method of lowering the emissivity of a doped tin oxide film. However, the emissivities of the films disclosed in the publication are in the order of 0.25 to 0.29, which are too high for good low-emissivity glass.

Published patent US 4,728,353, Glaverbel, 1 March 1988, discloses an apparatus for pyrolytically forming a metal compound coating on a hot glass substrate. It is essential to the operation of the apparatus that the gaseous environment in the immediate vicinity of the glass substrate is controlled by feeding preheated gas thereto to form a protective atmosphere in the vicinity of the glass substrate. The protective atmosphere enables the prevention of surrounding air from penetrating into the coating area. The publication discloses that the preheated gas is preheated air, so the coating formation reactions occur in an oxygen-rich atmosphere. The publication discloses the feed of liquid coating material by spraying, but does not disclose the diameter of the mist drop. Since atomizers had not been developed to produce small droplets in 1988, it was evident to a person skilled in the art at that time that the diameter of the mist drop was several dozens of micrometers. Publication Arthur H. Lefebvre, Atomization and Sprays, Taylor&Francis, USA, 1989, discloses different atomizers. The word 'mist' generally used in patent publications refers to drops having a diameter of about 100 micrometers (said publication, page 80), and with pressure-dispersing and air-dispersing atomizers, the drop size distributions disclosed with in said publication (particularly pages 201 to 273) never show drops less than 10 micrometres, the average diameters typically being 30 to 80 micrometers. The evaporation of such a drop is possible during the 10-second time mentioned in the publication, provided that the air temperature is several hundreds of degrees, such as is indeed described in the publication. However, the heating of air makes the solution expensive, particularly when large quantities of air described in the publications are used.

Coated flat glass is used in different building applications, such as energy saving, heat radiation reflecting glasses (low-emissivity, i.e. low-e glass) or self-cleaning glasses. In the former case, the glass is coated in most cases with tin oxide doped with fluorine (FTO), in the latter case with titanium dioxide preferably having the crystal form of an anatase.

Different prior art atomizers are disclosed in publication Huimin Liu, Science and Engineering of Droplets - Fundamentals and Applications, William Andrew Publishing, LLC, New York, 2000, particularly pages 23 to 25. When reference is made later in the present text to the diameter of drops produced with prior art atomizers, reference is made to this publication.

Published patent US 7,008,481 B2, 7 March 2006, Innovative Thin Films, Ltd., discloses a method and an apparatus for preparing a homogeneous pyrolytic coating. The apparatus disclosed in the publication removes large drops from a mist of liquid droplets, whereby the uniformity of the coatings improves. The publication does not mention the size of the liquid drops used, but the publication makes reference to prior art atomizers, whereby the liquid drop size can be assumed to be more than 10 micrometres. The publication also refers to electrostatic and ultrasound atomizers, but the production rate of these atomizers is low and they are not as such suitable for a coating process for flat glass requiring a large droplet production.

Published patent US 5,882,368, 16 March 1999, Vidrio Piiano De Mexico, S.A. DE C.V., discloses a method and an apparatus for coating a hot glass substrate with a mist of fine droplets. The mist droplets are produced with a plurality of ultrasound atomizers. The description of the publication describes the production of droplets with an ultrasound atomizer having a frequency of 1 MHz, yielding droplets having a diameter of less than 10 micrometres, typically 5 micrometres. The temperature of the glass ribbon to be coated is 580 to 610°C.

A prior art problem is that a hot glass ribbon should be coated in a temperature of about 580°C at the lowest, whereby, in practice, the coating unit should be situated, e.g. on the production line for flat glass (a float line), inside the tin bath or immediately after the tin bath, whereby the apparatus construction required is expensive. A further prior art problem is that the coating consumes relatively much time. A prior art problem is that it does not present a method of advantageously producing a coating on the surface of glass from liquid raw materials, the oxidation degree of the coating being lower than the oxidation degree of a completely oxidized coating. The coating should preferably be produced at the preparation or processing rate of the glass product, such as flat glass, at a temperature of at most 650°C. In prior art, droplets used for coating have been produced with electrostatic atomizers and ultrasound atomizers for producing sufficiently small droplets for achieving a high-quality coating. However, the problem in electrostatic atomizers and ultrasound atomizers is that they are incapable of high material production, which is also noted in publication Huimin Liu, Science and Engineering of Droplets - Fundamentals and Applications, William Andrew Publishing, LLC, New York, 2000. In addition, electrostatic atomizing and ultrasound atomizing require a separate carrier gas that does not directly mix with the droplets in the atomizing event. In coating based on ultrasound atomizing and also on electrostatic atomizing, droplets are conducted to a coating chamber and during the transport event, part of the material may be dried or react into solid particles, as is mentioned in publication US 5,882,368. At least part of these reaction products and solid particles end up in the coating causing mistiness therein. In addition, these gas phase reactions impair the efficiency of the material use in the process. Prior art pneumatic atomizers, in turn, may achieve a sufficient material yield to produce a coating on a moving glass ribbon, but the size of the drops generated by these known pneumatic atomizers is too large for achieving a high-quality coating.

### BRIEF DESCRIPTION OF THE INVENTION

It is thus an object of the invention to provide a method and an apparatus for implementing the method so as to solve the above problems. The object of the invention is achieved with an apparatus according to the characterizing part of claim 1, which is **characterized in that** the apparatus further comprises one or more flow restraints for changing the hydrodynamic properties of the aerosol flow discharging from the atomizing head in a manner reducing the drop size of the drop jet before it is conducted onto the surface of the glass. The object of the invention is further achieved with a method according to the characterizing part of claim 14, which is characterized by the method comprising the steps of:
atomizing at least one liquid raw material by means of at least one gas-dispersing atomizer into aerosol that is discharged from an atomizing head of the atomizer;
reducing the drop size of the aerosol discharged from the atomizing head of the atomizer by changing the hydrodynamic properties of the aerosol flow by means of flow restraints; and
conveying the aerosol onto the surface of the glass product, wherein the aerosol reacts providing a coating onto the surface of the glass product.

Preferred embodiments of the invention are described in the dependent claims.

The present invention is based on the idea of pneumatically or gas-dispersedly producing or atomizing a drop jet or an aerosol from at least one liquid raw material by making the average drop size of the drop jet or aerosol 3 micrometres or less, preferably 1 micrometre or less. Producing small droplets in accordance with the present invention is based on the surprising observation that by subjecting a drop jet or an aerosol produced with a pneumatic atomizer to flow restraints, an aerosol can be produced, provided that the flow rate of the drop jet or aerosol is sufficient, wherein the average diameter of the liquid drops is less than 3 micrometres and preferably less than 1 micrometre. This may be implemented for instance by feeding an aerosol produced with a gas-dispersing atomizer into a tube containing a plurality of flow restraints disposed inside the tube, whereby mist having a very small drop size can be produced, provided that the drop-gas mixture, i.e. the aerosol, travels at a sufficiently high rate in the tube. The flow restraints are used to change the hydrodynamic properties of the aerosol produced in a manner reducing the average drop size of the aerosol.

The principle of the invention may be utilized in coating glass products at a temperature of less than 650°C, for example. In this case, a hot glass product may be coated, which may be a glass ribbon flowing in a float process, for example. In the float process, melt glass flows first on the surface of melt tin, after which it rises onto a roll conveyer and flows further to a cooling furnace. As regards the coating of the glass ribbon, the most advantageous place is between the tin bath and the cooling furnace, wherein the temperature of the glass is typically 630 to 530°C. The hot glass product may also be a glass product moving in a glass hardening process, for example. In the glass hardening process, the glass product is first heated typically to a temperature of about 650°C, whereupon the surface of the product is rapidly cooled with air jets. The glass product may also be heated to a temperature of 500 to 650°C in a separate offline device for the coating according to the invention.

The atomizing liquid raw material may be a metal salt dissolved in water or alcohol, for example. Alcohol or another exothermic liquid is preferable, since is does not bind process heat as does water. The salt may preferably be a nitrate, since the solubility of nitrates into water and alcohols is generally good. The alcohol is preferably methanol. As regards functional coatings, preferable metals include tin, fluorine, antimony, indium, zinc and aluminium, which are used in the preparation of conductive coatings (coating of doped tin oxide or doped zinc oxide, antimony may be used to provide the coating also with solar absorption, i.e. a so-called 'solar control' property), vanadium, which is used in the preparation of an electrochromic coating (coating of oxygen deficit vanadium oxide, VO₂), and silicon, used in the preparation of a refractive index adjustment coating (coating of oxygen deficit silicon oxide, SiOₓ). The metal-containing liquid raw material may also as such be a solution, for instance tin tetrachloride, silicon tetrachloride (SiCl₄), tin tetrachloride (SnCl₄), monobutyl tin chloride (MBTC), trifluoroacetic acid (TFA), hydrogen fluoride (HF), or the like. Raw materials having a high steam pressure at room temperature are preferable to the process. A metal-containing raw material may also be a colloidal solution, colloidal silica, for example. In this case, the diameter of the colloidal metal oxide particles is typically less than 100 nm.

It is typical of the glass products described in the present application that the coating is substantially composed of an oxygen deficit metal oxide, which may be doped or undoped. It is preferable that the electrically conductive metal oxide coatings have crystal defects in the coating structure, generating conductivity in the coating. Typically, such crystal defects are oxygen deficit in the crystal structure. An electrochromic coating is mainly composed of vanadium oxide, VO₂, which is accomplished only if a deficit of oxygen is usable for the oxidation of the vanadium. If more oxygen exists, vanadium is oxidized into the form V₂O₅, which has no electrochromic properties. A reflective index adjustment coating is composed of oxygen deficit silicon oxide SiOₓ, wherein x is between 1 < x < 2. The coating may also be a completely oxygen deficit compound, such as magnesium fluoride, MgF₂, which produces an antireflection coating having a low reflective index. For achieving an oxygen deficit metal oxide coating, an oxygen deficit gas atmosphere is generated in the coating chamber by feeding inert or reducing gas into the coating chamber, such as at least nitrogen, carbon dioxide, carbon monoxide, hydrogen, methane or propane. It is most preferable to use this gas feed also for the atomizing of the liquid raw material.

In some coating applications, such as in electrically conductive coatings of solar cells, it is preferable that the coating also comprises small particles whose diameter is typically less than 200 nm. Such particles scatter light, and due to the small particle size, the majority of the scattering is directed forward, whereby the sunlight can be collected into the solar cell more efficiently. Such a fine particle may be produced in the coating along with the raw material, for instance by using a raw material solution also containing colloidal particles. The material of the particles is preferably the same as the material of the coating.

An advantage of the present invention is that it enables the production of small droplets having a diameter of less than 3 micrometres or less. Small droplets are preferable as regards the process, since their diffusion rate in the coating chamber is substantially higher than that of usual mist drops. Small droplets evaporate faster, which is preferable as regards the speed of the process. Since gravitation affects small droplets less than mist drops, no defects are generated on the glass surface to be coated, as does from mist drops settling on the surface by the action of gravitation. Since the mass of a liquid drop of the size 1 micrometre, for example, is only one thousandth of the mass of a liquid drop of the size 10 micrometres, the smaller liquid drop evaporates and burns in the pyrolysis process substantially more easily than the larger one, allowing the coating to be made at a lower temperature and/or at a higher rate. In addition, since these small droplets may be produced pneumatically, with a gas-dispersing atomizer, for example, a large material output can be achieved combined with the production of small droplets, which has not been possible in accordance with the prior art. In addition, the use of a separate carrier gas is avoided, allowing the apparatuses to be made simpler. Furthermore, the solution of the invention, wherein the drop size of the drop jet or aerosol is reduced by means of flow restraints, the particle size distribution of the drop jet or aerosol can be reduced, which in prior art gas-dispersing atomizers is wide.

### BRIEF DESCRIPTION OF THE FIGURES

In the following, the invention will be described in more detail in connection with preferred embodiments with reference to the accompanying drawings, in which
Figure 1 shows an embodiment of the atomizer of the invention;
Figure 2 shows the typical drop size distribution of mist produced with an atomizer according to the invention;
Figure 3 shows an embodiment for implementing the device of the invention, the device of the embodiment enabling the production of an oxygen deficit coating onto the surface of a glass product;
Figure 4 shows another embodiment for implementing the device of the invention, the device of the embodiment enabling also the production of nanoparticles in the coating by a liquid flame injection process; and
Figure 5 shows a third embodiment for implementing the device of the invention, the device of the embodiment enabling the production of nanoparticles in the coating by nucleation of the particles in the vicinity of the surface of the glass product.

### DETAILED DESCRIPTION OF THE INVENTION

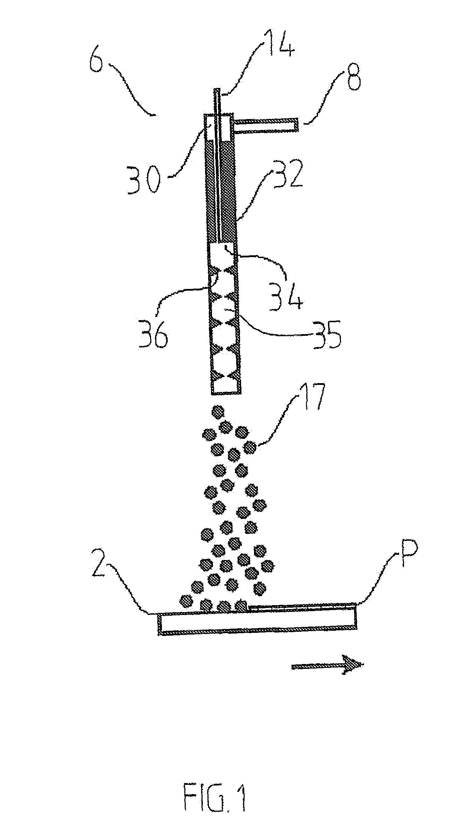

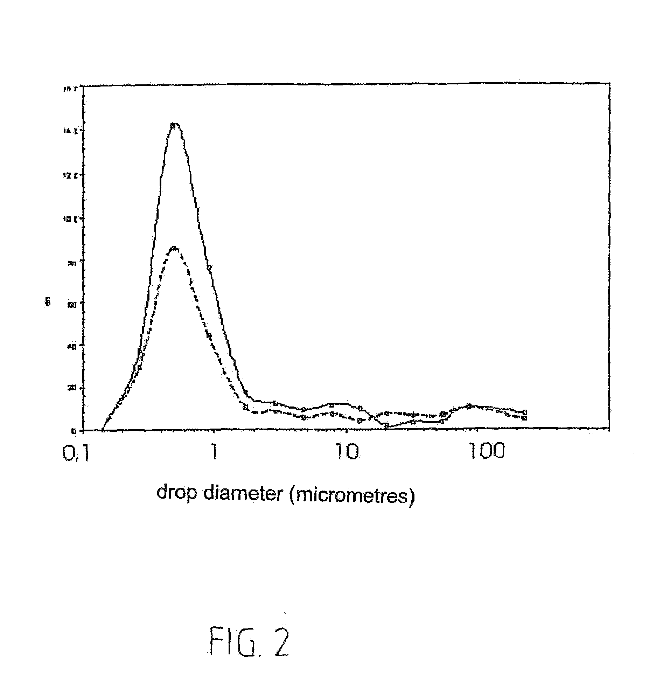

Figure 1 shows a preferred embodiment of the invention illustrating an atomizer according to the invention. Liquid raw material is fed from a conduit 14 into an atomizer producing ultra small liquid droplets. The raw material is a combination of monobutyl tin chloride (MBTC) - trifluoroacetate (TFA) - methanol in a weight ratio of 3:1:5. The feed rate of the raw material is 20 ml/min. As the atomizing gas, nitrogen N₂ is conducted into a gas conduit 8. An equalizing chamber 30 and flow restraints 32 distribute the nitrogen flow evenly around a liquid conduit 14, whereby the liquid is atomized into droplets in an atomizing nozzle 34. The volume flow of nitrogen gas is about 20 l/min. The drop size of the aerosol atomizing from the atomizing nozzle 34, i.e. from an atomizing head 34, is relatively large. As the aerosol flow moves on, flow restraints 36 change the hydrodynamic properties of the aerosol flow and surprisingly change the drop size of the aerosol into ultra small droplets. The mechanism is based both on collision energy and on the pressure variation caused by the flow restraints 36. In other words, the flow restraints 36 are arranged in such a manner that the droplets of the aerosol discharging from the atomizing head 34 collide with one or more flow restraints 36 and/or with each other for reducing the drop size of the aerosol. In addition or alternatively, the flow restraints 36 are arranged in such a manner that they cause a pressure variation and/or a throttling in the flow of the aerosol discharging from the atomizing head 34 for reducing the drop size of the aerosol. As the result, ultra small droplets 17 are discharged from the nozzle, the particle size distribution thereof being shown in Figure 2. The ultra small droplets are further guided onto the surface of glass 2, whose temperature is 500°C in this embodiment. The droplets are pyrolyzed onto the surface of the glass 2, whereby a fluorine-doped tin oxide coating P is provided onto the surface.

In accordance with the above, the device for forming aerosol comprises at least one gas-dispersing atomizer 6 for atomizing liquid 3 into aerosol by means of gas at the atomizing head 34 of the atomizer 6. The atomizer 6 comprises at least one liquid conduit 14 for feeding at least one liquid 3 to be atomized into the atomizing head 34 and at least one gas conduit 8 for feeding at least one gas into the atomizing head 34 for atomizing the liquid into aerosol. The atomizing gas atomizes the liquid 3 into aerosol at the atomizing head 34, particularly as the result of the rate difference between the atomizing gas and the liquid 3 discharging at the atomizing head 34. The atomizer 6 further comprises one or more flow restraints 36 for changing the hydrodynamic properties, such as rate and pressure, for example, of the flow of aerosol discharging from the atomizing head 34 in a manner reducing the drop size of the drop jet. The atomizer 6 may be provided with an atomizing chamber 35 provided with the flow restraints 36 and in flow connection with the atomizing head 34. In Figure 1, the atomizing chamber 36 is a tubular space, but it may also be some other space. There may be one or more flow restraints 36 and they may be placed in succession, adjacently or in a corresponding manner with respect to each other. The flow restraints 36 may for instance guide, slow down or throttle the aerosol flow. In accordance with Figure 1, the flow restraints 36 are provided in the inner walls of the atomizing chamber 34 in such a manner that they project from the inner walls into the atomizing chamber 34. The flow restraints 36 are preferably arranged in a manner making the drops of the aerosol discharging from the atomizing head 34 collide with one or more flow restraints 36 and/or with each other for reducing the drop size of the drop jet. In addition or alternatively, the flow restraints 36 are arranged in a manner causing pressure variation and/or throttling in the flow of aerosol discharging from the atomizing head 34 for reducing the drop size of the drop jet. By means of the flow restraints 36, an average aerodynamic diameter of 3 micrometres or less, preferably 1 micrometre or less, of the droplets of the aerosol discharging from the atomizer 6 is achieved.

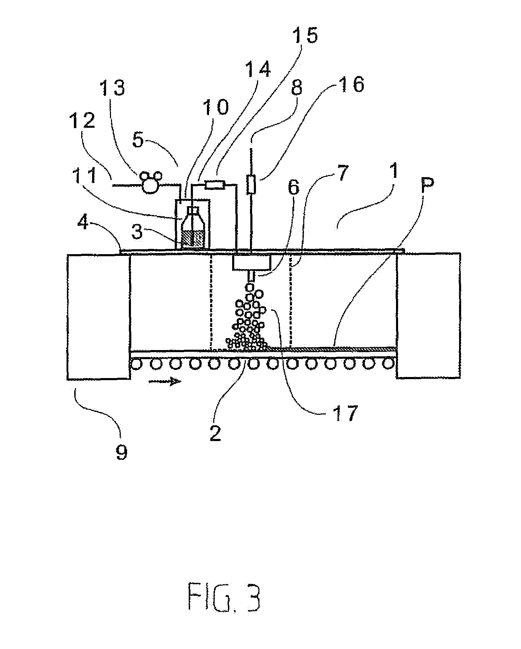

Figure 3 shows an embodiment of the apparatus of the invention for implementing the method of the invention. A device 1 is used for forming a coating P in a moving, hot glass ribbon 2. The coating P is made from at least one liquid raw material 3. A feed arrangement 5 for liquid raw material 3, composed of a pressurized vessel 10, inside which is a bottle 1 containing liquid raw material, is connected to a body 4 of the device. Gas pressure is conducted into the vessel 10 from a line 12 whose pressure is adjusted with a pressure adjuster 13. The pressure required is determined according to the atomizer 6 employed, and is typically between 0.1 and 100 bar. The liquid raw material 3 flows along the line 14 and through a flow meter 15 to the atomizer 6. Furthermore, a gas flow is conducted to the atomizer 6 along a conduit 8 and through a flow adjuster 16. The structure of the atomizer 6 is described in more detail above in connection with Figure 1. The atomizer 6 atomizes the liquid raw material into droplets 17 having an average diameter of less than 3 micrometres for generating aerosol with the aid of the flow restraints 36. In an alternative embodiments, the flow restraints 36 are not provided in the atomizer 6, but arranged as a separate part in a space between the atomizer 6 and the glass in such a manner that the flow restraints 36 are in the flow path of the aerosol discharging from the atomizer 6 as it travels on the surface of the glass 2.

The atomizer 6 is situated in a chamber 7 substantially separating the inner gas atmosphere of the chamber from the surrounding atmosphere. An inert or reducing gas is fed into the chamber 7 from a gas conduit, which is preferably the gas conduit 8 used for atomizing the liquid raw material. It is evident to a person skilled in the art that the gas can also be conducted to the chamber from elsewhere and that there may be more than one gases and feed conduits.

The moving, hot glass ribbon 2 enters the coating chamber from a tin bath 9 of the float line, the temperature of the glass ribbon 2, when it rises from the bath, being at most 650°C.

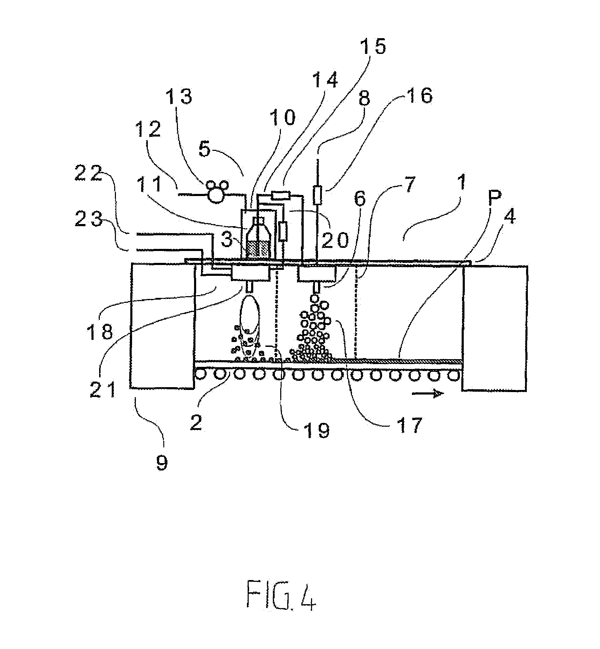

Figure 4 shows an embodiment of the present invention, the device 18 of the embodiment allowing also nanoparticles 19 to be produced in the coating P by the liquid flame injection process. The device 18 comprises means 20 for conducting part of the liquid raw material 3 to be atomized to a liquid flame injection burner 21, which produces particles 19 that have an average diameter of less than 200 nm and are conducted onto the surface of the glass product 2. Combustion gas from a conduit 22 and oxidizing gas from a conduit 23 are also conducted to the liquid flame injection burner 21. In the Figure, the device 18 is arranged to grow the particles 19 onto the surface of the glass product 2 for providing the coating P, but the device 18 may also be arranged to grow the particles 19 onto the surface of the glass product 2 after the generation of the coating P. Furthermore, it is to be noted that it is not necessary to use the liquid raw material 3 for producing the particles, but the particles may also be produced from some other liquid raw material.

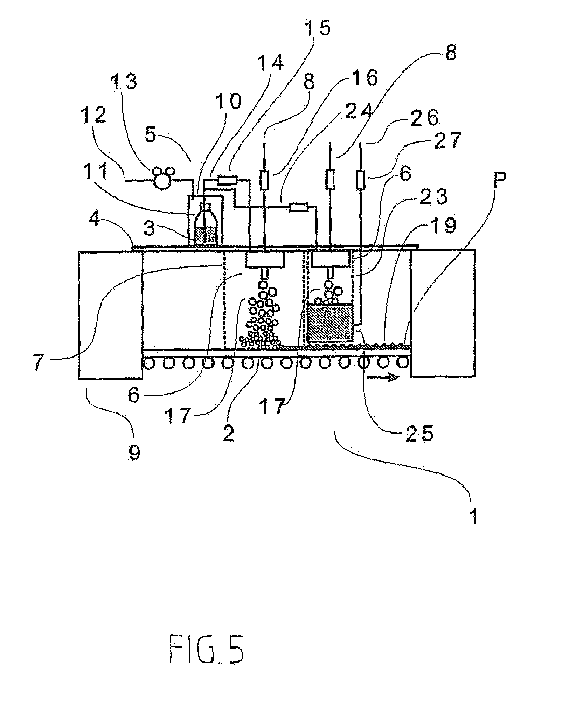

Figure 5 shows an embodiment of the present invention, the device 23 of the embodiment allowing also nanoparticles 19 to be produced in the coating. The device 23 comprises means 24 for conducting part of the liquid raw material to be atomized to the atomizer 6 for producing small droplets 17. Alternatively, the small droplets 17 are produced by means of the atomizer 6 and the separate flow restraints 36. The small droplets 17 are further conducted to a thermal reactor 25, wherein the metal contained by the droplets is vaporized. Oxidizing gas is also conducted to the thermal reactor 25 from a conduit 26 through a flow adjuster 27. The oxidizing gas reacts with the vaporized metal generating metal oxide, which is nucleated into nucleation-form nanoparticles 19 having an average diameter of about 50 nanometres and being conducted onto the surface of the glass product 2. In the figure, the device 23 is arranged to grow the particles 19 onto the surface of the glass product 2 after the generation of the coating P, but the device 23 may also be arranged to grow the particles 19 onto the surface of the glass product 2 before the generation of the coating P. The thermal reactor 25 is preferably a burner or a flame accomplished by means of a combustion gas and an oxidizing gas. It is to be noted also in this embodiment, that the thermal reactor 25 may be in any atomizer 6 of the invention when the apparatus comprises one or more atomizers 6. In addition, an atomizer 6 comprising a thermal reactor 25 does not have to use the same liquid raw material as the atomizer(s) conducting the coating material as liquid droplets onto the surface of the glass product 2.

The liquid raw material used in the method of the invention may be a mixture, an emulsion or a colloidal solution. An emulsion refers to a mixture of at least two liquids that are inherently immiscible with one another. A colloidal solution refers to a solution composed of two different phases: a dispersed phase and a continuous phase. The dispersed phase contains small particles or droplets evenly distributed into the continuous phase. In other words, a colloidal solution is a solution containing colloidal particles.

In the following, the operation of the method and the device of the invention will be described with examples.

### Example 1: Production of a fluorine-doped tin oxide coating

A fluorine-doped tin oxide coating was produced with the embodiment of the invention according to Figure 1. The liquid raw material 3 was a solution containing, as weight fractions, 30 parts of methanol (MeOH), 20 parts of monobutyl tin chloride (MBTC, CAS number 1118-46-3) and 9 parts of trifluoroacetate acid (TFA, CAS number 76-05-1). A bottle 11 containing the raw material liquid was placed into a pressure tank 10, which was pressurized with nitrogen gas (N₂) flowing through a regulator 13 from line 12 to a pressure of 3 bar. Because of the pressure, the raw material 3 flowed through line 14 and a flow meter 15 to the atomizer 6. The flow amount was 150 ml/min. per atomizer width metre. From line 8, nitrogen gas (N₂) was fed through a flow adjuster 16, the flow amount being 500 l/min. per atomizer width metre. The glass product 2 was heated in an oven 9 to a temperature of 550°C, after which the glass product moved under a coating chamber 7 at a rate of 3 m/min. After the coating, the glass product 2, coated with the coating P, was placed in a stress-relieve oven at a temperature of 500°C, and the product was allowed to cool slowly to room temperature.

The measurements, conducted with a Keithley 2400 General Purpose Source-Meter, provided with an Alessi CPS-05 measuring head, showed that the sheet resistance of the glass product was less than 20 Ω/ . The emissivity measurements conducted with a Mk2 Emission meter (Sten Löfving Optical Sensors, Sweden) measured the emissivity of the coating P to be 0.09 to 0.14.

### Example 2: Production of a fluorine-doped tin oxide coating having a high haze value

A fluorine-doped tin oxide coating was produced by the embodiment according to Figure 2.

The liquid raw material 3 was a solution containing, as weight fractions, 30 parts of methanol (MeOH), 20 parts of monobutyl tin chloride (MBTC, CAS number 1118-46-3) and 9 parts of trifluoroacetate acid (TFA, CAS number 76-05-1). A bottle 11 containing the raw material liquid was placed into a pressure tank 10, which was pressurized with nitrogen gas (N₂) flowing through a regulator 13 from line 12 to a pressure of 3 bar. Because of the pressure, the raw material 3 flowed through line 20 to a liquid flame spray nozzle 21. The flow amount was 30 ml/min. per liquid flame spray nozzle 21 width metre. From conduit 22, nitrogen gas (N₂) also flowed to the liquid flame spray nozzle 21, the flow amount being 300 l/min. per liquid flame spray nozzle width metre, and oxygen gas (02) from conduit 23, the flow amount being 100 l/min. per liquid flame spray nozzle width metre. By means of the liquid flame spray nozzle 21, oxide particles containing tin and fluorine were produced from the raw material 3, the average diameter of the particles being less than 100 nm and part of which ending up onto the surface of the glass product 2. Because of the pressure, the raw material 3 flowed through line 14 and a flow meter 15 to the atomizer 6. The flow amount was 150 ml/min. per atomizer width metre. From line 8, nitrogen gas (N₂) was fed through a flow adjuster 16, the flow amount being 500 l/min. per atomizer width metre. The glass product 2 was heated in an oven 9 to a temperature of 550°C, after which the glass product moved first under the liquid flame spray nozzle 21 and then under a coating chamber 7 at a rate of 3 m/min. After the coating, the glass product 2, coated with nanoparticles and the coating P, was placed in a stress-relieve oven at a temperature of 500°C, and the product was allowed to cool slowly to room temperature.

Haze was measured from the coated product in accordance with standard ASTM D 1003, and the haze value was found to be 5 to 10%.

### Example 3: Production of a vanadium dioxide coating

A vanadium oxide coating VO₂ was produced by the embodiment of the invention according to Figure 1. The liquid raw material 3 was a solution containing, as weight fractions, 30 parts of methanol (MeOH) and 20 parts of vanadium tetrachloride (VCl₄, CAS number 7632-51-1). A bottle 11 containing the raw material liquid was placed into a pressure tank 10, which was pressurized with nitrogen gas (N₂) flowing through a regulator 13 from line 12 to a pressure of 3 bar. Because of the pressure, the raw material 3 flowed through line 14 and a flow meter 15 to the atomizer 6. The flow amount was 100 ml/min. per atomizer width metre. From line 8, nitrogen gas (N₂) was fed through a flow adjuster 16, the flow amount being 500 l/min. per atomizer width metre. The glass product 2 was heated in an oven 9 to a temperature of 550°C, after which the glass product moved under a coating chamber 7 at a rate of 3 m/min. After the coating, the glass product 2, coated with the coating P, was placed in a stress-relieve oven at a temperature of 500°C, and the product was allowed to cool slowly to room temperature.

### Example 4: Production of a SiOₓ coating

An oxygen deficit, carbon-doped SiOₓ coating was produced by the embodiment of the invention according to Figure 1. The liquid raw material 3 was a solution containing, as weight fractions, 20 parts of methanol (MeOH) and 20 parts of silicon tetrachloride (SiCl₄, CAS number 10026-04-7). A bottle 11 containing the raw material liquid was placed into a pressure tank 10, which was pressurized with nitrogen gas (N₂) flowing through a regulator 13 from line 12 to a pressure of 3 bar. Because of the pressure, the raw material 3 flowed through line 14 and a flow meter 15 to the atomizer 6. The flow amount was 200 ml/min. per atomizer width metre. From line 8, nitrogen gas (N₂) was fed through a flow adjuster 16, the flow amount being 800 l/min. per atomizer width metre. The glass product 2 was heated in an oven 9 to a temperature of 550°C, after which the glass product moved under the coating chamber 7 at a rate of 3 m/min. After the coating, the glass product 2, coated with the coating P, was placed in a stress-relieve oven at a temperature of 500°C, and the product was allowed to cool slowly to room temperature.

It is obvious to a person skilled in the art that as technology advances, the basic idea of the invention can be implemented in a variety of ways. Consequently, the invention and its embodiments are not restricted to the above examples, but may vary within the scope of the claims.

## Claims

1. An apparatus (1) for providing a coating onto the surface of glass (2), the apparatus (1) comprising at least one gas-dispersing atomizer (6) for atomizing at least one liquid (3) used for coating the glass (2) into aerosol by means of gas at an atomizing head (34) of the atomizer (6) and one or more flow restraints (36) for changing the hydrodynamic properties of the aerosol flow discharging from the atomizing head (34) in a manner reducing the drop size of the aerosol before it is conducted onto the surface of the glass (2), **characterized in** the flow restraints (36) are arranged in such a manner that the average aerodynamic diameter of the drops of the aerosol discharging from the atomizer (6) is 3 micrometres or less, preferably 1 micrometre or less.

2. An apparatus (1) as claimed in claim 1, **characterized in that** the atomizer (6) comprises an atomizing chamber (35), which is in flow connection with the atomizing head (34) and in which the flow restraints (36) are arranged.

3. An apparatus (1) as claimed in claim 2, **characterized in that** the flow restraints (36) are arranged in the inner walls of the atomizing chamber (34) in such a manner that they protrude from the inner walls to the inside of the atomizing chamber (34).

4. An apparatus (1) as claimed in claim 1, **characterized in that** the flow restraints (36) are arranged between the atomizing head (34) of the atomizer (6) and the glass (2).

5. An apparatus (1) as claimed in any one of the preceding claims 1 to 4, **characterized in that that** the flow restraints (36) are arranged in such a manner that the drops of the aerosol discharging from the atomizing head (34) collide with one or more flow restraints (36) and/or with each other for reducing the drop size of the aerosol, and/or that the flow restraints (36) are arranged in such a manner that they generate a pressure variation and/or a throttling in the aerosol flow discharging from the atomizing head (34) for reducing the drop size of the aerosol.

6. An apparatus (1) as claimed in any one of the preceding claims 1 to 6, **characterized in that** the apparatus (1) comprises means (18; 6, 25) for producing particles (19) having an average diameter of less than 200 nm and for conducting them onto the surface of the glass (2) before and/or after the aerosol of the atomized liquid (3) is conducted onto the surface of the glass.

7. An apparatus (1) as claimed in claim 6, **characterized in that** the apparatus (1) comprises at least one liquid flame injection burner (21) for producing particles (19) having an average diameter of less than 200 nm for coating the glass (2), or that the apparatus (1) comprises one or more thermal reactors (25) for converting at least part of the aerosol produced with at least one atomizer (6) into particles having an average diameter of less than 200 nm.

8. An apparatus (1) as claimed in claim 7, **characterized in that** the thermal reactor (25) is a flame provided by means of a combustion gas and an oxidizing gas.

9. A method for providing a coating onto the surface of a glass product (2) from at least one liquid raw material (3), the method comprises the steps of:
atomizing at least one liquid raw material (3) by means of at least one gas-dispersing atomizer (6) into aerosol that is discharged from an atomizing head (34) of the atomizer (6);
reducing the drop size of the aerosol discharged from the atomizing head (34) of the atomizer (6) by changing the hydrodynamic properties of the aerosol flow by means of flow restraints (36); and
conveying the aerosol onto the surface of the glass product (2), wherein the aerosol reacts providing a coating onto the surface of the glass product (2), **characterized by** reducing the average drop size of the aerosol by changing the hydrodynamic properties of the aerosol flow by means of the flow restraints (34) in such a manner that the average aerodynamic diameter of the drops of the aerosol is 3 micrometres or less, preferably 1 micrometre or less.

10. A method as claimed in claim 9, **characterized by** reducing the average drop size of the aerosol by changing the hydrodynamic properties of the aerosol flow by means of the flow restraints (34) in such a manner that the drops of the aerosol discharging from the atomizing head (34) collide with one or more flow restraints (36) and/or with each other for reducing the drop size of the aerosol.

11. A method as claimed in claim 9 or 10, **characterized by** reducing the average drop size of the aerosol by changing the hydrodynamic properties of the aerosol flow by means of the flow restraints (34) in such a manner that they generate a pressure variation and/or a throttling in the aerosol flow discharging from the atomizing head (34) for reducing the drop size of the aerosol.

12. A method as claimed in any one of the preceding claims 9 to 11, **characterized by** the method also comprising producing particles (19) having an average diameter of less than 200 nm that are conducted onto the surface of the glass (2) before and/or after the aerosol produced from the liquid raw material (3) is conducted onto the surface of the glass.

13. A method as claimed in claim 12, **characterized by** producing particles (19) having an average diameter of less than 200 nm with a liquid flame injection burner (21) for coating the glass product (2), or by producing particles having an average diameter of less than 200 nm from an aerosol produced with at least one atomizer (6) by means of one or more thermal reactors (25).

14. A method as claimed in any one of the preceding claims 9 to 13, **characterized by** using the method for coating flat glass on a flat glass production line (a float line) and/or for coating flat glass on a flat glass hardening line.

15. A glass product (2) coated with a method as claimed in any one of the preceding claims 9 to 14.

16. A glass product (2) as claimed in claim 15, **characterized in that** the glass product (2) is low-emissivity glass (low-e glass), solar energy absorbing glass (solar control glass), electrochromic glass or a glass product having an emissivity of less than 0,15.
